# FASCICULE DE BREVET EUROPEEN

(11) **EP 1 034 997 B1**
(45) Date de publication et mention de la délivrance du brevet: **28.12.2005**
(21) Numéro de dépôt: 00400621.9
(22) Date de dépôt: 07.03.2000
(51) Int. Cl.: B61C 15/12, B60L 3/10

(54) **Dispositif de contrôle de l'adhérence d'un convoi ferroviaire éléctrique**
Vorrichtung zur Regelung des Reibschlusses eines elektrisch angetriebenen Eisenbahnzuges
Device for controlling the adherence of an electrically driven railway train

(30) Priorité: 11.03.1999 FR 9903014
(43) Date de publication de la demande: 13.09.2000
(73) Titulaire: Alstom, 92300 Levallois-Perret (FR)
(72) Inventeur: Liu, Rong Fan, 64000 Pau (FR)
(74) Mandataire: Blot, Philippe Robert Emile

(56) Documents cités:
- EP-A- 0 427 138
- DE-A- 19 539 652
- DE-C- 4 402 152
- DE-C- 19 548 286

## Description

La présente invention est relative à un dispositif de contrôle de l'adhérence d'une motrice d'un convoi ferroviaire électrique, et se rapporte également à un système d'alimentation d'une motrice de ce type incorporant un tel dispositif de contrôle d'adhérence.

Dans l'état de la technique, dans le but de transmettre aux roues motrices du véhicule ferroviaire une énergie motrice compatible avec leur adhérence, la motrice du véhicule est généralement dotée d'un dispositif de contrôle d'adhérence.

Dans le document DE-C-4402152, un tel dispositif comporte classiquement un étage de pilotage de l'alimentation du moteur de la motrice et un étage de contrôle d'adhérence délivrant à l'étage de pilotage un signal de consigne élaboré à partir d'au moins une caractéristique de fonctionnement du moteur, de manière à maîtriser, c'est à dire à réduire, voire éliminer, le patinage des roues de la motrice.

Un tel dispositif permet de réduire voire éliminer toute amorce de patinage des roues, en particulier lors du démarrage du véhicule.

Il présente toutefois un certain nombre d'inconvénients, notamment en raison du fait qu'il est susceptible de permettre un glissement trop important des roues sur le rail et d'engendrer une perte momentanée d'adhérence.

Le but de l'invention est de palier cet inconvénient.

Elle a donc pour objet un dispositif de contrôle de l'adhérence d'une motrice d'un convoi ferroviaire électrique selon la revendication 1, comprenant un étage de pilotage de l'alimentation du moteur de la motrice, un étage de contrôle d'adhérence proprement dit délivrant à l'étage de pilotage un signal de consigne élaboré à partir d'au moins une caractéristique de fonctionnement du moteur, de manière à maîtriser le glissement des roues de la motrice, et comportant en outre des moyens d'élaboration d'un signal d'activation du dispositif de contrôle et des moyens pour injecter le signal d'activation dans le signal de consigne de manière à lui faire délivrer un signal de consigne modifié, les moyens d'élaboration du signal d'activation comportant des moyens de mesure d'une deuxième caractéristique de fonctionnement du moteur et des moyens pour déceler le sens de variation de ladite deuxième caractéristique entre deux activations précédentes successives pour déterminer le signe du signal d'activation injecté dans le signal de consigne lors d'une excitation suivante. De plus, le signal de consigne est un signal de consigne de couple moteur; la première caractéristique est élaborée à partir d'une mesure de l'accélération du moteur et la deuxième caractéristique est élaborée à partir d'une mesure du couple moteur.

Il est aussi possible de transmettre en permanence un couple maximum aux roues motrices.

Le dispositif de contrôle conforme à l'invention peut en outre comporter une ou plusieurs des caractéristiques suivantes,
- le signal de consigne étant élaboré à partir d'une troisième grandeur caractéristique du fonctionnement du moteur, l'étage du signal d'activation comporte des moyens de comparaison entre la valeur de ladite troisième caractéristique et une valeur de seuil prédéterminée, les moyens d'élaboration du signal d'activation provoquant une variation consécutive de l'amplitude du signal d'activation en fonction du résultat de ladite comparaison;
- la troisième caractéristique est élaborée à partir d'une mesure de l'accélération du moteur.

L'invention a également pour objet un système de commande de l'alimentation d'un moteur d'une motrice d'un convoi ferroviaire électrique, comprenant un circuit d'alimentation du moteur en énergie électrique, caractérisé en ce qu'il comporte un dispositif de contrôle de l'adhérence de la motrice tel que défini ci-dessus.

D'autres caractéristiques et avantages ressortiront de la description suivante, donnée uniquement à titre d'exemple, et faite en référence aux dessins annexés sur lesquels :
- la figure 1 est un schéma synoptique montrant la structure d'un système de commande de l'alimentation d'une motrice, conforme à l'invention;
- la figure 2 est un schéma synoptique montrant schématiquement la structure d'un dispositif de contrôle d'adhérence conforme à l'invention.
- la figue 3 est une courbe montrant la variation de l'effort transmis aux roues motrice en fonction du glissement ;
- la figure 4 illustre des courbes montrant la variation, en fonction du temps, du signal de consigne injecté à l'étage de pilotage, de l'accélération du moteur et du glissement des roues.

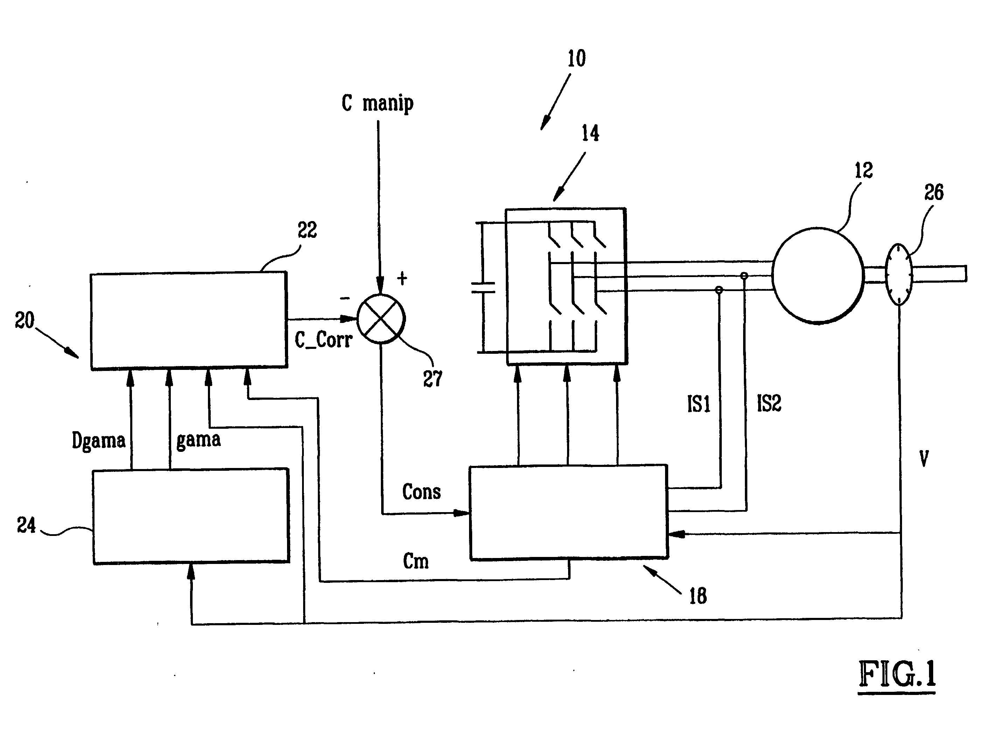

Sur la figure 1, on a représenté la structure générale d'un système 10 de commande de l'alimentation d'un moteur 12 d'une motrice d'un convoi ferroviaire électrique.

Le moteur 12 est alimenté en énergie électrique par une source d'alimentation 14 sous le contrôle d'un étage 18 de pilotage de l'alimentation du moteur 12.

On notera que l'étage de pilotage 18 est constitué à partir d'éléments appropriés pour l'utilisation envisagée, de type classique, c'est à dire appropriés pour réguler le couple du moteur 12 autour d'une valeur à laquelle le moteur est autorisé à fonctionner, à partir d'un signal de consigne Cmanip. il ne sera donc pas décrit en détail par la suite.

Conformément à l'invention, le système est doté d'un dispositif de contrôle d'adhérence 20.

Ce dispositif, qui incorpore l'étage de pilotage 18, comporte en outre un étage 22 de contrôle d'adhérence proprement dit délivrant à l'étage de pilotage 18 un signal de consigne permettant de transmettre un couple maximum aux roues motrices.

Comme on le voit sur figure 1, l'étage de contrôle d'adhérence 22 reçoit, en entrée, des signaux correspondants à des caractéristiques représentatives du fonctionnement du moteur 12 délivrés par un étage de traitement 24 à partir d'un signal V de mesure de la vitesse de rotation du moteur 12 délivré par un capteur 26 approprié.

Plus particulièrement, l'unité de traitement 24 délivre à l'étage de contrôle d'adhérence 22 un signal gama correspondant à l'accélération du moteur 12 et un signal Dgama correspondant à la dérivée, par rapport au temps, de l'accélération du moteur 12, ce signal Dgama étant utilisé pour augmenter la réactivité du dispositif.

L'unité de contrôle d'adhérence 22 reçoit également le signal de message V de la vitesse de rotation du moteur et un signal Cm correspondant à la valeur du couple électromagnétique estimé du moteur 12 fourni par l'étage de pilotage 18, lequel reçoit, en entrée, des signaux IS1 et IS2 de mesure du courant d'alimentation du moteur 12 dans le cas où le moteur est triphasée, une seule mesure de courant étant suffisante dans le cas d'un moteur à courant continu, ainsi que le signal V de mesure de la vitesse de rotation du moteur, fourni par le capteur 26.

L'étage de contrôle d'adhérence 22 élabore, à partir de l'accélération du moteur gama de la dérivée Dgama de l'accélération et de la valeur Cm du couple estimé du moteur I2, un signal d'activation C_corr du dispositif de contrôle d'adhérence de manière à lui faire délivrer un signal de consigne modifié.

Ce signal d'activation C_corr est constitué par un signal fourni en entrée d'un soustracteur 27 de manière à le soustraire au signal de consigne Cmanip. pour élaborer le signal de consigne Cons présenté en entrée de l'étage de pilotage 18.

Comme on le conçoit, le signal d'activation C_Corr, engendre un décalage dans le signal de consigne Cons par rapport à la consigne issue du manipulateur.

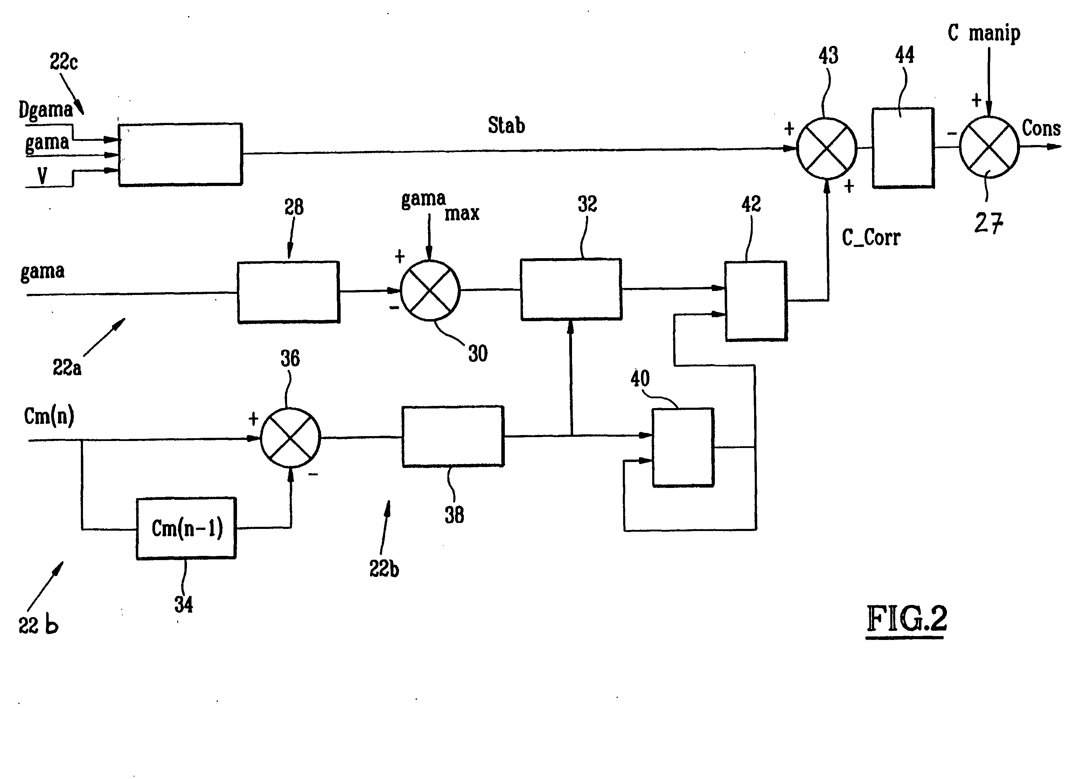

La description détaillée d'un exemple de réalisation de l'étage de contrôle d'adhérence 22 va maintenant être faite en référence à la figure 2.

Cet étage comporte, d'une part, une première partie 22a adaptée pour mettre en forme le signal d'activation C_Corr, et en particulier pour calculer l'amplitude de ce signal et une deuxième partie 22b permettant la détermination du signe de ce signal C_corr. Comme on le voit sur cette figure 2, la première partie 22a comporte des moyens de mémorisation 28 assurant une mémorisation de la valeur absolue de la valeur maximale de l'accélération gama entre deux activations consécutives.

Ces moyens de mémorisation 28 sont raccordés, en sortie, à un comparateur 30 assurant une comparaison entre la valeur mémorisée et une valeur maximale de seuil gamaₘₐₓ.

La sortie de ce comparateur est fournie en entrée d'un circuit de mise en forme 32 adapté pour augmenter l'amplitude du signal d'activation C_corr par rapport à celle du signal d'activation précédent dans le cas où la valeur mémorisée dans les moyens de mémorisation est inférieure à cette valeur de seuil gamaₘₐₓ et pour diminuer cette amplitude dans le cas contraire.

La deuxième partie 22b de l'étage de contrôle d'adhérence 22 reçoit en entrée, quant à elle, le signal Cm correspondant à la valeur estimée du couple électromagnétique du moteur 12 et détecte le sens de variation de ce couple électromagnétique entre deux excitations successives.

Pour ce faire, cette deuxième partie 22b comporte des moyens de mémorisations 34 assurant le stockage du couple électromagnétique Cm(n-1) correspondant à l'activation précédente et un comparateur 36 assurant la comparaison entre les couples électromagnétique Cm (n) et Cm(n-1) des deux activations consécutives précédentes.

La sortie du comparateur 36 est raccordée à un filtre 38 assurant une mise en forme de la sortie de ce comparateur 36 permettant de piloter une porte bi-stable 40 de manière à changer le signe du signal d'activation dans le cas où une diminution du couple électromagnétique a été détectée et à maintenir inchangé le signe du signal d'activation dans le cas contraire.

Comme on le voit sur cette figure 2, la sortie des première et deuxième parties 22a et 22b est raccordée à un circuit multiplicateur 42, lequel délivre, en sortie, le signal d'activation C_corr injecté dans le signal de consigne au moyen de l'additionneur 27.

Un troisième étage 22c de stabilisation délivre, à partir des signaux gama, Dgama et V, un signal de stabilisation Stab permettant de stabiliser le système sur un point d'équilibre dans lequel le couple moteur est égal au couple transmis au rail, ce signal Stab étant injectée dans le signal C_corr par un additionneur 43.

L'additionneur 43 est raccordé à un circuit de filtrage 44 de limitation du signal ainsi élaboré afin d'éviter qu'il ne dépasse la valeur du signal de consigne Cmanip.

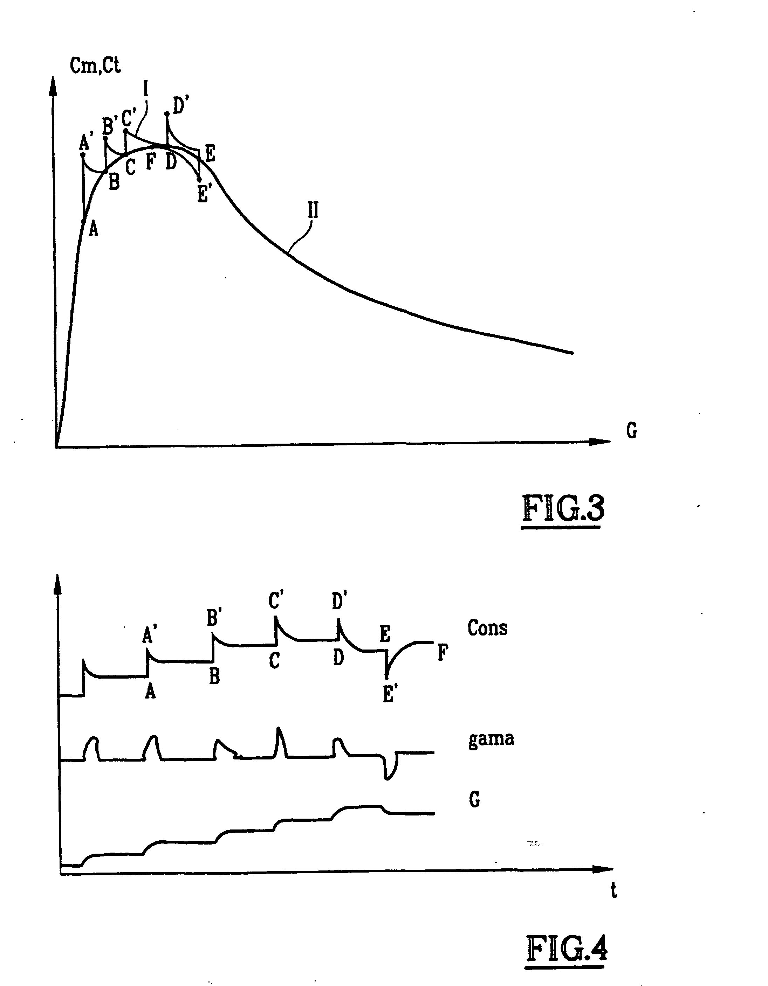

Le fonctionnement du dispositif de contrôle qui vient d'être décrit va maintenant être illustré en référence aux figures 3 et 4 sur lesquelles on a représenté, respectivement, la variation, en fonction du glissement G, d'une part, du couple moteur Cm (courbe 1) et, d'autre part, de l'effort transmis à la jante Ct (courbe 2), et la variation, en fonction du temps t, du signal de consigne Cons, de l'accélération du moteur gama, et du glissement G.

En se référant à la figure 3, on considérera que le dispositif est stabilisé sur le point A, la valeur de l'accélération gama du moteur étant nulle.

Dans cet état stable, l'étage de contrôle d'adhérence 22 provoque une excitation du dispositif en provoquant une variation du signal de consigne Cons de manière à rendre le couple moteur Cm supérieur au couple transmis (point A').

Cette modification provoque une augmentation du glissement et rend l'accélération du moteur gama positive.

En réponse à cette excitation, l'étage de stabilisation 22C provoque une correction relative de la valeur de la consigne Cons de couple moteur de manière a rendre nulle l'accélération gama et stabiliser ainsi le dispositif (point B).

Pour procéder aux excitations suivantes, l'étage de contrôle d'adhérence 22 effectue une surveillance du sens de variation du couple moteur Cm entre les excitations successives de manière a déterminer le signe du signal d'activation C_corr.

Comme on le voit sur la figure 3, pour les activations correspondant aux points B', C' et D', le signe du signal d'activation reste inchangé.

Au contraire, lors de l'activation suivante correspondant au point E', la différence des couples change de signe, ce qui provoque un changement du signe du signal d'activation C_corr, et engendre une diminution relative du glissement G et un changement de signe de l'accélération gama du moteur 12. En réponse, l'étage de stabilisation 22c provoque une augmentation de la consigne de couple Cons de manière à stabiliser à nouveau le dispositif de contrôle (point F).

On conçoit donc que l'action de l'étage d'activation 22 permet de maintenir le couple moteur à l'intérieur d'une plage de valeurs optimales et de transmettre aux roues motrices un couple maximum permis par l'adhérence disponible.

## Revendications

1. Dispositif de contrôle de l'adhérence d'une motrice d'un convoi ferroviaire électrique, comprenant un étage (18) de pilotage de l'alimentation du moteur (12) de la motrice, un étage (22θ) de contrôle d'adhérence proprement dit délivrant à l'étage de pilotage un signal de consigne (Cons) élaboré à partir d'au moins une première caractéristique (gama) de fonctionnement du moteur (12) de manière à maîtriser le glissement des roues de la motrice, l'étage de contrôle d'adhérence (22) comportant en outre des moyens d'élaboration d'un signal d'activation (c-corr) du dispositif de contrôle et des moyens (27) pour injecter le signal d'activation dans le signal de consigne (Cons) de manière à lui faire délivrer un signal de consigne modifié, lesdits moyens d'élaboration du signal d'activation comportant des moyens de mesure d'une deuxième caractéristique (Cm) de fonctionnement du moteur (12) et des moyens pour déceler le sens de variation de ladite deuxième caractéristique (Cm) entre deux activations précédentes successives pour déterminer le signe du signal d'activation injecté dans le signal de consigne (Cons) lors de l'excitation suivante, **caractérisé en ce que** le signal de consigne est un signal de consigne de couple moteur, **en ce que** la première caractéristique est élaborée à partir d'une mesure de l'accélération (gama) du moteur, et **en ce que** la deuxième caractéristique (Cm) est élaborée à partir d'une mesure du couple moteur.

2. Dispositif selon la revendication 1, **caractérisé en ce que** le signal de consigne étant élaboré à partir d'une troisième caractéristique du fonctionnement du moteur (12), l'étage du signal d'activation comporte des moyens de comparaison entre la valeur de ladite troisième caractéristique et une valeur de seuil (gamaₘₐₓ) prédéterminée, lesdits moyens d'élaboration du signal d'activation provoquant une variation consécutive de l'amplitude du signal d'activation en fonction du résultat de ladite comparaison.

3. Dispositif selon la revendications 2, **caractérisé en ce que** la troisième caractéristique est élaborée à partir d'une mesure de l'accélération (gama) du moteur.

4. Système de commande de l'alimentation d'un moteur d'une motrice d'un convoi ferroviaire électrique, comprenant un circuit (14) d'alimentation du moteur (12) en énergie électrique, **caractérisé en ce qu'**il comporte en outre un dispositif de contrôle de l'adhérence de la motrice selon l'une quelconque des revendications 1 à 3.

## Claims

1. Device for regulating the adherence of the power car of an electric train, comprising a stage (18) for controlling the power supply to the engine (12) of the power car, a stage (22) for regulating the actual adherence, sending the controlling stage a reference signal (Cons) generated from at least one first operational characteristic (gama) of the engine (12) so as to govern the sliding of the wheels of the power car, the adherence controlling stage (22) further comprising means for generating an activation signal (C-Corr) for the control device and means (27) for injecting the activation signal into the reference signal (Cons) so as to cause it to deliver a modified reference signal, said means for generating the activation signal comprising means for measuring a second operational characteristic (Cm) of the engine (12) and means for detecting the direction of variation of said second characteristic (Cm) between two successive previous activations in order to determine the sign of the activation signal injected into the reference signal (Cons) during the subsequent excitation, **characterised in that** the reference signal is an engine torque reference signal, **in that** the first characteristic is generated from a measurement of the acceleration (gama) of the engine, and **in that** the second characteristic (Cm) is generated from a measurement of the engine torque.

2. Device according to claim 1, **characterised in that** as the reference signal is generated from a third operational characteristic of the engine (12), the stage of the activation signal comprises means for comparing the value of said third characteristic with a predetermined threshold value (gamaₘₐₓ), said means for generating the activation signal causing a subsequent variation in the amplitude of the activation signal as a function of the result of said comparison.

3. Device according to claim 2, **characterised in that** the third characteristic is generated from a measurement of the acceleration (gama) of the engine.

4. System for controlling the power supply to an engine of a power car of an electric train, comprising a circuit (14) for supplying the engine (12) with electrical energy, **characterised in that** it further comprises means for controlling the adherence of the power car according to any one of claims 1 to 3.

## Patentansprüche

1. Vorrichtung zur Kontrolle der Haftung eines elektrischen Triebwagens eines Eisenbahnzuges, eine Stufe (18) zur Steuerung der Versorgung des Motors (12) umfassend, eine Stufe 22 zur eigentlichen Haftungskontrolle, die an die Steuerungsstufe ein Anweisungssignal (Cons) abgibt, das aus mindestens einem ersten Betriebsmerkmal (gama) des Motors (12) abgeleitet wird, um das Rutschen der Räder des Triebwagens zu beherrschen, wobei die Haftungskontrollstufe (22) außerdem Mittel zur Erstellung eines Signals zur Aktivierung (C-Corr) der Kontrollvorrichtung umfasst und Mittel (27) zum Einfügen des Aktivierungssignals in das Anweisungssignal (Cons), um ein geändertes Anweisungssignal ausgeben zu lassen, wobei die genannten Mittel zur Erstellung des Aktivierungssignals Mittel zur Messung eines zweiten Betriebsmerkmals (Cm) des Motors (12) umfassen und Mittel zur Feststellung der Richtung der Änderung des genannten zweiten Merkmals (Cm) zwischen zwei vorangehenden, aufeinander folgenden Aktivierungen zur Bestimmung des Vorzeichens des Aktivierungssignals, das bei der folgenden Ansteuerung in das Anweisungssignal (Cons) eingefügt wird, **dadurch gekennzeichnet, dass** das Anweisungssignal ein Anweisungssignal über das Motordrehmoment ist, **dadurch**, dass das erste Merkmal aus einer Messung der Beschleunigung (gama) des Motors abgeleitet wird, und **dadurch**, dass das zweite Merkmal (Cm) aus einer Messung des Motordrehmomentes abgeleitet wird.

2. Vorrichtung nach Patentanspruch 1, **dadurch gekennzeichnet, dass** angesichts der Tatsache, dass das Anweisungssignal aus einem dritten Betriebsmerkmal des Motors (12) abgeleitet wird, die Aktivierungssignalstufe Mittel zum Vergleich des Wertes des genannten dritten Merkmals und eines festgelegten Schwellenwertes (gamaₘₐₓ) umfasst, wobei die genannten Mittel zur Erstellung des Aktivierungssignals eine folgende Änderung der Amplitude des Aktivierungssignals in Abhängigkeit vom Ergebnis des genannten Vergleichs bewirken.

3. Vorrichtung nach den Patentansprüche 2 bis 4, **dadurch gekennzeichnet, dass** das dritte Merkmal aus einer Messung der Beschleunigung (gama) des Motors abgeleitet wird.

4. System zur Steuerung der Versorgung eines Motors eines elektrischen Triebwagens eines Eisenbahnzuges, das einen Schaltkreis (14) zur Versorgung des Motors (12) mit elektrischer Energie umfasst, **dadurch gekennzeichnet, dass** es außerdem eine Vorrichtung zur Kontrolle der Haftung des Triebwagens nach irgendeinem der Patentansprüche 1 bis 3 umfasst.
